# EUROPEAN PATENT SPECIFICATION

(11) **EP 2 880 108 B1**
(45) Date of publication and mention of the grant of the patent: **04.12.2019**
(21) Application number: 12882011.5
(22) Date of filing: 27.12.2012
(51) Int. Cl.: C09D 133/04, C09D 175/04, C23C 26/00, C09D 5/08, C08K 13/02, C09D 7/61

(54) **ORGANIC-INORGANIC HYBRID COATING SOLUTION COMPOSITION AND ORGANIC-INORGANIC HYBRID COATED STEEL SHEET**
HYBRIDE ORGANISCH-ANORGANISCHE BESCHICHTUNGSLÖSUNGSZUSAMMENSETZUNG UND MIT DER HYBRIDEN ORGANISCH-ANORGANISCHEN BESCHICHTUNG BESCHICHTETES STAHLBLECH
COMPOSITION SOLUTION DE REVÊTEMENT HYBRIDE ORGANIQUE-INORGANIQUE ET FEUILLET D'ACIER RECOUVERT D'UNE SOLUTION HYBRIDE ORGANIQUE-INORGANIQUE

(30) Priority: 03.08.2012 KR 20120085369
(43) Date of publication of application: 10.06.2015
(73) Proprietor: Posco, Gyeongsangbuk-do 790-300 (KR)
(72) Inventor: KO, Kyoung-Pil, Gwangyang-si Jeollanam-do 545-711 (KR); PARK, Rho-Bum, Gwangyang-si Jeollanam-do 545-711 (KR); KIM, Jong-Sang, Gwangyang-si Jeollanam-do 545-711 (KR); LEE, Jung-Hwan, Gwangyang-si Jeollanam-do 545-711 (KR)
(74) Representative: Zech, Stefan Markus
(86) International application number: PCT/KR2012/011541
(87) International publication number: WO 2014/021520

(56) References cited:
- EP-A1- 2 495 351
- WO-A1-2007/075050
- WO-A2-2009/084849
- KR-A- 20090 107 835
- KR-A- 20090 107 835
- KR-B1- 100 928 798
- US-A1- 2010 203 274
- US-A1- 2010 272 991
- US-B2- 8 211 220

## Description

### [Technical Field]

The present invention relates to an organic-inorganic hybrid coating solution composition and an organic-inorganic hybrid coated steel sheet using the same.

### [Background Art]

WO 2007/075050 A1, WO 2009/084849 A2, EP 2 495 351 A1 and KR 2009 0107835 A, describe anti-corrosion coatings for steel such as zinc-plated steel.

Surface treatment methods, in which zinc-plated steel sheets and zinc-based alloy-plated steel sheets, aluminum- plated steel sheets, aluminum-based alloy-plated steel sheets, cold-rolled steel sheets, and hot-rolled steel sheets used for automotive materials, household appliances, or building materials are coated with a chromate coating layer having chromium as a main component in order to provide corrosion resistance and plating adhesion, have been generally performed in the related art. Major chromate treatments may be classified as an electrolytic type chromate treatment and a coating type chromate treatment. With respect to the electrolytic type chromate treatment, a method of cathodic electrolysis of a metal plate has been generally used by employing a treatment solution having hexavalent chromium as a main component and other various negative ions, from sources such as sulfuric acid, phosphoric acid and boric acid, as well as halogens, added thereto. Meanwhile, with respect to the coating type chromate treatment, a method of dipping a metal plate in a treatment solution or spraying the treatment solution onto the metal plate has generally been used by employing a treatment solution having inorganic colloids and inorganic ions added to a solution having a portion of hexavalent chromium reduced into trivalent chromium.

In the case that these methods are used, various safety measures may be required in working environments as well as waste water treatment processes, due to the toxicity of hexavalent chromium (Cr) contained in a chromate treatment solution, and the recycling and waste disposal of automobiles, household appliances, or building materials having the foregoing surface treated metal used therein may also cause hazards to the human body and environmental contamination issues.

Therefore, steel mills have focused on developing Cr-free surface-treated steel sheets satisfying various properties required in addition to corrosion resistance, while as not having hexavalent chromium contained therein.

In addition, since the price of zinc, a main material of a plating layer in a plated steel sheet, has been rapidly increasing, research into replacing zinc with other elements, decreasing a content of zinc or reducing a coating weight thereof has been continuously conducted by various steel mills.

A technique of using zinc aluminum-magnesium (ZAM) has been proposed as a representative technique. This technique uses a smaller amount of zinc in comparison to the related art and aims at using common aluminum or magnesium as a main component of the plating layer. With respect to such alloy-plated steel sheets, a predetermined level of corrosion resistance or greater may be secured, but operability, surface appearance, high-temperature and high-humidity resistance, and weldability may be deteriorated.

Also, a technique of reducing a coating weight of a plated steel sheet has been suggested as another method. However, coating weight is a factor greatly affecting corrosion inhibition and long-term rust resistance of metal. Accordingly, in a hot-dip galvanized steel sheet, the time required for red rust to be generated, i.e., corrosion resistance, may increase as zinc coating weight increases. Thus, higher manufacturing costs may be incurred by steel mills because zinc coating weight may not be able to be reduced due to the decrease in corrosion resistance in which red rust is facilitated.

Therefore, there is a need for research into a technique able to compensate for a decrease in corrosion resistance as well as reducing zinc coating weight and not using a Cr-containing solution.

### [Disclosure]

### [Technical Problem]

An aspect of the present invention provides a coating solution composition able to compensate for a decrease in corrosion resistance (SST) despite a reduction in a zinc coating weight and a coated steel sheet using the same.

### [Technical Solution]

According to an aspect of the present invention, there is provided an organic-inorganic hybrid coating solution composition including: 12 wt% to 36 wt% of a urethane-acryl hybrid resin, wherein an NCO/OH equivalence ratio of the urethane-acryl hybrid resin is in a a range of 1 to 3; 8 wt% to 24 wt% of a nanosilicate-phenoxy hybrid resin;
8 wt % to 33 wt % of silane A;
28 wt % to 57 wt % of silane B;
3 wt % to 11 wt % of vanadium phosphate;
0.1 wt % to 1.4 wt % of magnesium (Mg) oxide;
2 wt % to 10 wt % of zinc phosphate;
0.5 wt % to 3.4 wt % of titanium carbonate;
0.5 wt % to 4 wt % of a zirconium (Zr) compound; and
0.4 wt % to 3 wt % of silica, based on a solid content.

According to another aspect of the present invention, there is provided an organic-inorganic hybrid coated steel sheet including: a base steel sheet; a zinc-based plating layer formed on the base steel sheet; and a coating layer formed on the plating layer, wherein the coating layer may be formed with the .organic-inorganic hybrid coating solution composition.

### [Advantageous Effects]

According to an aspect of the present invention, solution stability of an organic-inorganic hybrid coating solution may be improved. In the case that an organic-inorganic hybrid coating layer is formed on a surface of a zinc-plated steel sheet with the coating solution, corrosion resistance of the steel sheet may be significantly increased. Also, solvent resistance of the coating layer may be increased and conductivity of the coated steel sheet may be improved.

### [Description of Drawings]

The above and other aspects, features and other advantages of the present invention will be more clearly understood from the following detailed description taken in conjunction with the accompanying drawings, in which:
FIG. 1 is a schematic view illustrating a method of securing corrosion resistance in an organic-inorganic hybrid coated steel sheet according to an aspect of the present invention;
FIG. 2 is a photograph illustrating evaluation of corrosion resistance of a coated steel sheet in a Conventional Example; and
FIG. 3 is a photograph illustrating evaluation of corrosion resistance of an organic-inorganic hybrid coated steel sheet in the Inventive Example, according to an embodiment of the present invention.

### [Best Mode]

As a result of a significant amount of research conducted, into securing corrosion resistance of a plated steel sheet, the present inventors deduced an optimum combination, of a binder, resin able to maximize a barrier effect of an organic-based material and a rust inhibition effect of an inorganic-based material as well as accommodation of an inorganic-based anti-corrosion agent, and recognize that corrosion resistance may be secured by forming an organic-inorganic hybrid coating layer on one side or both sides of the steel sheet despite a reduction of the coating weight of a zinc-plating layer, thereby leading to completion of the present invention.

Hereinafter, an organic-inorganic hybrid coating solution composition according to an aspect of the present, invention will be described in detail. The coating solution composition includes 12 wt% to 36 wt% of a urethane-acryl hybrid resin, 8 wt% to 24 wt% of a nanosilicate-phenoxy hybrid resin, and 40 wt% to 80 wt% of an inorganic-based anti- corrosion agent based on a solid content.

The urethane-acryl hybrid resin and the nanosilicate-phenoxy hybrid resin as an organic-based resin are included in a total amount ranging from 20 wt% to 60 wt%, and the inorganic-based anti-corrosion agent is included in an amount ranging from 40 wt% to 80 wt%. Herein, the organic-based resin acts as a binder resin and may be set to accommodate a large amount of the inorganic-based anti-corrosion agent for securing corrosion resistance.

The reason for limiting a content of each component will be described below.

### 1) Urethane-acryl hybrid resin: 12 to 36 wt%

The urethane-acryl hybrid resin used in the present invention is prepared by simultaneously mixing two resins in the process of synthesizing each resin. That is, the urethane-acryl hybrid resin is a hybrid resin prepared by mixing urethane and acryl emulsion immediately before the completion of the synthesis of each resin at a temperature of 80°C while triethylamine (TEA) is added thereto, and may provide a coating layer having a dense structure. At this time, the urethane-acryl hybrid resin may be included in an amount of 12 wt% or more in order to secure corrosion resistance and solvent resistance. However, since an effect of improving physical properties due to the input of the urethane-acryl hybrid resin is insignificant even in that case that the input content thereof is excessively high, an upper limit thereof may be controlled to be 36 wt%.

The lower the weight-average molecular weight of the urethane-acryl hybrid resin is, the higher the cross-linking density is. However, since stability of the inorganic anti- corrosion agent may be deteriorated, control of the weight- average molecular weight is important. In the case that the weight-average molecular weight is less than 40,000, the inorganic anti-corrosion agent may be precipitated. In contrast, in the case that the weight-average molecular weight is greater than 90, 000, corrosion resistance may be deteriorated. Therefore, the weight-average molecular weight of the urethane-acryl hybrid resin is controlled to be within a range of 40,000 to 90,000. Also, the weight-average molecular weight may be controlled to be within a range of 65,000 to 70,000 and for example, may be controlled to be 68,000.

In addition, resin hardness is secured by controlling a compositional ratio of isocyanate constituting a hard segment. For this purpose, an equivalence ratio between a NCO group and an OH group is within a range of 1 to 3 during the polymerization of the urethane-acryl hybrid resin. Herein, in the case that a value of the NCO/OH equivalence ratio is less than 1, blackening resistance after processing may be deteriorated. In contrast, in the case in which the value of the NCO/OH equivalence ratio is greater than 3, solution stability and corrosion resistance may be deteriorated. Further, the value of the NCO/OH equivalence ratio may be controlled to be within a range of 1.3 to 1.9 in order to secure the foregoing effect, and for example, may be controlled to be 1.6.

### (2) Nanosilicate-phenoxy hybrid resin: 8 to 24 wt%

The nanosilicate-phenoxy hybrid resin used in the present invention is a hybrid resin prepared by adding a nanosilicate anti-corrosion agent in the process of synthesizing a phenoxy resin and the nanosilicate-phenoxy hybrid resin may act to improve corrosion resistance, blackening resistance after processing, and chemical resistance of the coated steel sheet. At this time, the nanosilicate-phenoxy hybrid resin may be included in an amount of 8 wt% or more in order to secure corrosion resistance and blackening resistance after processing. However, since an effect of improving physical properties due to the input of the nanosilicate-phenoxy hybrid resin is insignificant even in the case that the input content thereof is excessively high, an upper limit thereof may be controlled to be 24 wt%.

Also, the nanosilicate-phenoxy hybrid resin may include 1.0 wt% to 3.0 wt% of nanosilicate. The nanosilicate may be included in an amount of 1.0 wt% or more in order to exhibit an effect of an anti-corrosion agent. However, since a degree of improving the foregoing effect with respect to the addition amount is insignificant even in that case that the input content thereof is high and solution stability of the hybrid resin is deteriorated, an upper limit thereof may be controlled to be 3.0 wt%.

The lower the weight-average molecular weight of the nanosilicate-phenoxy hybrid resin is, the higher the cross-linking density is. However, since stability of the inorganic anti-corrosion agent nanosilicate may be deteriorated, control of the weight-average molecular weight is important. In the case that the weight-average, molecular weight is less than 40,000, the inorganic anti-corrosion agent may be precipitated. In contrast, in the case that the weight-average molecular weight is greater than 90,000, corrosion, resistance may be deteriorated. Therefore, the weight-average molecular weight of the nanosilicate-phenoxy hybrid resin is controlled to be within a range of 40,000 to 90,000. Also, the weight- average molecular weight may be controlled to be within a range of 74,000 to 82,000 and for example, may be controlled to be 78,000.

### 3) Inorganic-based anti-corrosion agent: 40 to 80 wt%

The inorganic-based anti-corrosion agent includes one or more of 8 wt% to 33 wt% of silane A, 28 wt% to 57 wt% of silane B, 3 wt% to 11 wt% of vanadium phosphate, optionally 0.5 wt% to 7 wt% of thio-urea, 0.1 wt% to 1.4 wt% of magnesium (Mg) oxide, 2 wt% to 10 wt% of zinc phosphate, 0.5 wt% to 3.4 wt% of titanium carbonate, 0.5 wt% to 4 wt% of a zirconium (Zr) compound and 0.4 wt% to 3 wt% of silica. Herein, the silane A and the silane B are categorized according to the type of silane and are described to indicate that two different types of silane are included in the present invention.

### Silane A: 8 to 33 wt%

In general, silane compounds may include epoxy-based, chloro-based, amino-based, or acryl-based silane, and, in the present invention, epoxy-based silane may be used in view of solution stability. Herein, the epoxy-based silane may include at least one of gamma glycidoxypropyl triethoxysilane and gamma aminopropyl triethoxysilane. A content of the silane A introduced is controlled to be 8 wt% or more in order to effectively block corrosive factors by considering solvent resistance and water repellency of the coating layer and securing a sufficient hydrophobic group. However, in the case that the content of the silane A is excessively high, solution stability may decrease and an effect of improving corrosion resistance according to the increase in the content thereof may be insignificant, and thus, an upper limit of the content thereof is controlled to be 33 wt%. However, the content thereof, for example, may be within a range of 12 wt% to 33 wt%.

### Silane B: 28 to 57 wt%

The silane B, different from the foregoing silane A, may maximize corrosion resistance. The silane B is included in an amount of 28 wt% or more in order to improve corrosion resistance. An upper limit thereof is controlled to be 57 wt% in consideration of solution stability and an effect of improving corrosion resistance with respect to the addition amount. The silane B may include one or more of a vinyl-based silane, an epoxy-based silane, and an alkoxy-based silane.

### Vanadium phosphate: 3 to 11 wt%

The coating solution includes 3 wt% or more of vanadium phosphate in order to improve corrosion resistance. Since a blackening phenomenon, in which appearance of the steel sheet changes to black in a high-temperature and high-humidity atmosphere, may occur, an upper limit thereof is controlled to be 11 wt%.

### Thio-urea: 0.5 to 7 wt%

Thio-urea is an organic compound used for preparing resins and medicines, and is used as a hardening accelerator in the present invention and thus, almost no effect may be obtained in the case that a content thereof is 0.5 wt% or less In the case in which the content thereof is 0.5 wt% or more, an effect of decreasing time required for hardening the coating layer may be obtained, but solution stability may decrease in the case that the content thereof is excessively high. Therefore, an upper limit thereof may be limited to 7 wt%.

### Mg oxide: 0.1 to 1.4 wt%

Mg may be used by dissolving magnesium oxide (MgO) in a vanadium phosphate aqueous solution. Also, Mg oxide is included in an amount of 0.1 wt% or more in order to secure the effect of corrosion resistance. Since solution stability may decrease in the case that a content thereof is excessively high, an upper limit thereof is controlled to be 1.4 t%.

### Zinc phosphate: 2 to 10 wt%

Zinc, phosphate, is added as an auxiliary additive for improving corrosion resistance. Herein, a content of the zinc phosphate is controlled to be 2 wt% in order to secure corrosion resistance. However, since solution stability is decreased and an effect of improving physical properties is insignificant with respect to the addition amount in the case that the content thereof is excessively high, an upper limit thereof is controlled to be 10 wt%.

### Titanium carbonate: 0.5 to 3.4 wt%

Titanium carbonate is included for the stability of the coating solution and the reactivity of the base steel sheet and the coating solution, and may act as a coupling agent for the resin and the inorganic material. The titanium carbonate is included in an amount of 0.5 wt% or more in order to secure corrosion resistance. However, since an effect of improving corrosion resistance may be insignificant with respect to the addition amount even in the case that the content thereof is high, an upper limit thereof is controlled to be 3.4 wt%.

### Zr compound: 0.5 to 4 wt%

The Zr compound is included in. order to improve corrosion resistance. The Zr compound is included in an amount of 0.5 wt% or more in order to secure corrosion resistance. However, since an effect of improving corrosion resistance, may be insignificant with respect to the addition amount even in the case that the content thereof is high, an upper limit thereof is limited to 4 wt%.

### Silica: 0.4 to 3 wt.%.

Silica is included for improving corrosion resistance and colloidal silica is mainly used. The silica is included in an amount of 0.4 t% or more in order to secure corrosion resistance. However /since solution stability may be decreased in the case that the content thereof is high, an upper limit thereof is limited to 3 wt%.

Corrosion resistance of the steel sheet may be maximized by forming a coating layer on one side or both sides of the steel sheet to be later described with a coating solution having the foregoing composition.

Hereinafter, an organic-inorganic hybrid coated steel sheet according to another aspect of the present invention will be described in detail. The organic-inorganic hybrid coated steel sheet of the present invention may include a base steel sheet, a zinc-based plating layer formed on the base steel sheet, an organic-inorganic hybrid coating layer formed on the zinc-based plating layer, and may include 12 wt% to 36 wt% of a urethane-acryl hybrid resin, 8 wt% to 24 wt% of a nanosilicate-phenoxy hybrid resin, and 40 wt% to 80 wt% of an inorganic-based anti-corrosion agent based on a solid content.

The base steel sheet is not particularly limited, and any steel sheet may be used so long as the base steel sheet is suitable for the purpose of the present invention.

A method of forming the zinc-based plating layer may be performed with a hot-dip galvanizing method. However, any method may be additionally used so long as the method may form a zinc-based plating layer. Also, a component system of the zinc-based plating layer is not particularly limited, a component system of a plating layer of a typical hot-dip galvanized steel sheet or electrogalvanized steel sheet may be used.

Also, the organic-inorganic hybrid coated steel sheet may include a coating layer formed on one side or both sides of the steel sheet having the zinc-based plating layer formed thereon. One side or both sides of the steel sheet may be coated with the coating solution. At this time, a coating weight of the coating layer may be controlled to be within a range of 0.5 g/m² to 2 g/m². A lower limit of the coating weight may be controlled to be 0.5 g/m² in order to secure corrosion resistance intended in the present invention. However, in the case that the coating weight is greater than 2 g/m², conductivity of the coating layer may decrease.

Hereinafter, a component system of the coating layer will be described in detail. The coating layer may be formed with the foregoing coating solution and the component system may also be deduced from a component system of the coating solution.

The urethane-acryl hybrid resin and the nanosilicate-phenoxy hybrid resin may be included in an amount of 20 wt% or more in order to secure corrosion resistance, solvent resistance, and blackening resistance after processing. However, since these components act as a binder and an effect of improving physical properties due to the input thereof is insignificant even in the case that the input content thereof is excessively high, an upper limit thereof may be controlled to be 60 wt%. Herein, characteristics of the resin may exhibit the characteristics of the hybrid resin described in the foregoing coating solution.

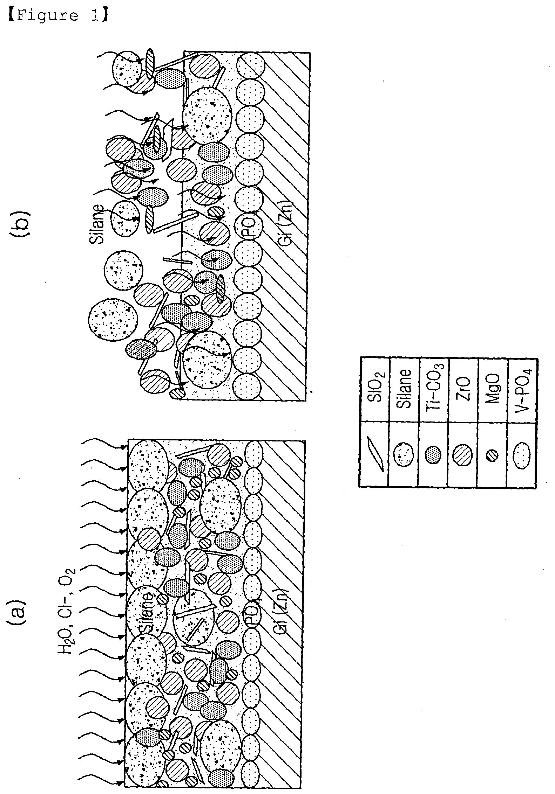

Also, as schematically illustrated in FIGS. 1(a) and 1(b), silane A, silane B, and vanadium phosphate included in the coating layer act as a barrier, and silica, titanium carbonate, a Zr compound, Mg oxide, and zinc phosphate act to provide rust resistance (corrosion delay) as an anti-corrosion' agent.

The silane A and the silane B included in the coating layer are overall distributed in the coating layer and act to protect corrosion factors. The silane A and the silane B may have good hydrophobic and barrier effects, but may have limitations in solution stability when excessive amounts thereof are added. Therefore, the silane A and the silane B are included in an amount ranging from 1 wt% to 2 wt%. A maximum amount of 33 wt% of the silane A and the silane B is included in the present invention and thus, even an intermediate layer as well as an uppermost portion of the coating layer may maintain the barrier effect as well as the hydrophobicity of the coating layer.

Further, the corrosion factors may penetrate the foregoing barrier to reach vanadium phosphate (V-PO₄), a last layer. In particular, the vanadium phosphate layer reacts with a zinc layer thereunder to form a phosphate layer, and thus, may act as a final corrosion inhibition barrier in the coating layer. However, since the corrosion factors may attack the coating layer when some time has elapsed, white rust may occur in the zinc layer.

Next, silica, titanium carbonate, and the Zr compound as rust inhibitors react with the corrosion factors penetrating into the coating layer to form a more stable compound, and thus, may prevent white rust in the zinc layer by blocking the additional attack of the corrosion factors.

Hereinafter, the present invention will be described in detail, according to specific examples. However, the following examples are merely provided to allow for a clearer understanding of the present invention, rather than to limit the scope thereof. The scope of the present invention is defined by the appended claims and items reasonably inferable therefrom.

### [Example 1]

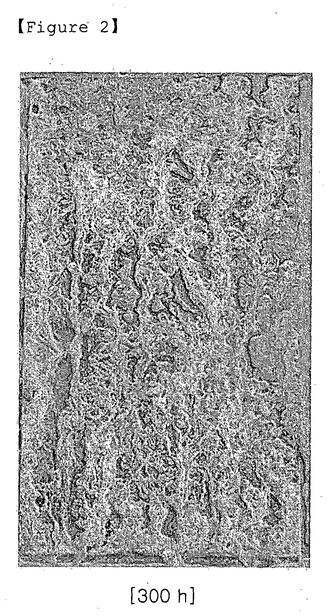

A hot-dip galvanized steel sheet having a coating weight of 70 g/m² based on one side thereof was coated with a chromium (Cr)-free solution (Patent Application No.: KR2005-0128523) with a bar coating method, and the hot-dip galvanized steel sheet was then heated to a peak metal temperature (PMT) of 140°C with an induction heater for baking and drying to prepare Conventional Example 1. At this time, measurement of a wet coating weight in Conventional Example 1 resulted in 680 mg/m². A photograph for identifying corrosion resistance with respect to the occurrence of white rust and red rust in Conventional Example 1 is shown in FIG. 2.

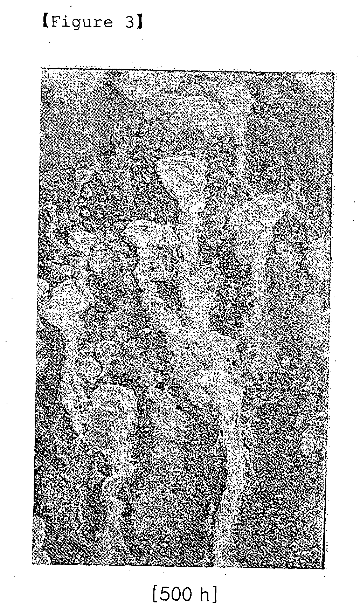

A hot-dip galvanized steel sheet having a coating weight of 40 g/m² based on one side thereof was coated with a coating solution described in the present invention with a bar coating method, and the hot-dip galvanized steel sheet was then heated to 140°C with an induction heater for baking and drying to prepare Inventive Example 1. Measurement of a wet coating weight in Inventive Example 1 resulted in 680 mg/m². A photograph for identifying corrosion resistance with respect to the occurrence of white rust and red rust in Inventive Example 1 is shown in FIG. 3.

Corrosion resistance, plating adhesion, solvent resistance, and blackening resistance were measured and the results thereof are presented in the following Table 1.

Corrosion resistances were evaluated by performing salt spray tests on coated samples under conditions of a salt concentration of 5%, a temperature of 35°C, and a spray pressure of 1 kg/cm², and times required for generating 5% of red rust were measured. Also, the coated samples were rubbed ten times with a gauze soaked with a methyl ethyl ketone (MEK) reagent and solvent resistances were then evaluated by measuring color differences (delta E) after being compared with the original steel sheets. In addition, blackening resistances were evaluated by measuring color differences (delta E) before and after maintaining the samples in a constant temperature and humidity chamber having a temperature of 50°C and a relative humidity of 95% for 120 hours.

**[Table 1]**

| Category | Corrosion resistance (hour) | Solvent resistance (Delta E) | Blackening resistance (Delta E) |
|---|---|---|---|
| Conventional Example 1 | 300 | 1.0 | 2.0 |
| Inventive Example 1 | 500 | 1.0 | 1.0 |

In Conventional Example 1, 5% of red rust was generated in 300 hours. Also, a value of solvent resistance measured was 1.0, and a value of blackening resistance resulted in 2.0.

In contrast, in Inventive Example 1, 5% of red rust was generated in 500 hours. According to the results of evaluating solvent resistance and blackening resistance, values of color difference for both solvent resistance and blackening resistance resulted in 1.0.

Therefore, despite the fact that the hot-dip galvanized steel sheet using the coating solution described in the present invention had a zinc coating weight of 40 g/m² based on one side thereof, lower than that of 70 g/m² in Conventional Example 1, the time required for generating red rust was markedly increased, and thus, excellent corrosion resistance was obtained.

### [Example 2]

Surfaces of hot-dip galvanized steel sheets (zinc coating weight of 40 g/m²) were coated with coating solutions satisfying component systems described in the following Tables 2 and 3 with a roll coater method to control a coating weight to be 680 mg/m² and the hot-dip galvanized steel sheets were then heated to 140°C for baking and drying to prepare coated samples.

Solution stability of each coating solution prepared according to compositions in the following Tables 2 and 3 was evaluated, and corrosion resistance, solvent resistance, and blackening resistance of the coated steel sheets having the coating solutions coated thereon were evaluated and the results thereof are presented in the following Tables 2 and 3.

The solution stability was evaluated as poor (X) in the case that viscosity of the coating solution was increased in an amount of 20% or more with respect to that of an initial period, or, as a result of visual observation, precipitation, decomposition, and gellation of the solution were performed.

Corrosion resistances were evaluated by measuring times required for generating 5% of red rust on flat sheets under conditions of a salt concentration of 5%, a temperature of 35°C, and a spray pressure of 1 kg/cm². Also, evaluation criteria of corrosion resistance were described below based on 300 hours, a level greater than or equal to that of Conventional Example 1.
○: 300 hours or more
X: less than 300 hours

Also, the coated steel sheets were rubbed ten times with a gauze soaked with a methyl ethyl ketone (MEK) reagent and solvent resistances were then evaluated by measuring color differences (delta E) after being compared with the original steel sheets, and were then evaluated as below based on 2.0, a level required for a typical Cr-free coated steel sheet.
○: 2.0 or less
X: greater than 2.0

In addition, blackening resistances were evaluated by measuring color differences (delta E) before and after maintaining the coated steel sheets in a constant temperature and humidity chamber having a temperature of 50°C and a relative humidity of 95%, for 120 hours and were then evaluated as below based on 2.0, a level required for a typical Cr-free coated steel sheet.
O: 2.0 or less
X: greater than 2.0

| [0083] [Table 2] Category | Coating solution (wt%) | | | | | | | | | Quality characteristics | | |
|---|---|---|---|---|---|---|---|---|---|---|---|---|
| | V-PO₄ | MgO | Silane A | Hybrid resin A+B | Zinc phosphate | TiCO₃ | ZrO | Silica | Silane B | Solut-ion stability | Corrosion resistance | Blackening resistance |
| Comparative Example 1 | 2.5 | 0.7 | 12 | 30 | 3 | 0.7 | 1.5 | 0.8 | 41 | ○ | X | ○ |
| Inventive Example 2 | 3.0 | 0.7 | 12 | 30 | 3 | 0.7 | 1.5 | 0.8 | 41 | ○ | ○ | ○ |
| Inventive Example 3 | 5 | 0.7 | 12 | 30 | 3 | 0.7 | 1.5 | 0.8 | 41 | ○ | ○ | ○ |
| Inventive Example 4 | 11 | 0.7 | 12 | 30 | 3 | 0.7 | 1.5 | 0.8 | 41 | ○ | ○ | ○ |
| Comparative Example 2 | 12 | 0.7 | 12 | 30 | 3 | 0.7 | 1.5 | 0.8 | 41 | ○ | ○ | X |
| Comparative Example 3 | 5 | 0.05 | 12 | 30 | 3 | 0.7 | 1.5 | 0.8 | 41 | ○ | X | ○ |
| Comparative Example 5 | 5 | 0.7 | 5 | 30 | 3 | 0.7 | 1.5 | 0.8 | 41 | ○ | X | ○ |
| Inventive Example 7 | 5 | 0.7 | 8 | 30 | 3 | 0.7 | 1.5 | 0.8 | 41 | ○ | ○ | ○ |
| Inventive Example 8 | 5 | 0.7 | 33 | 30 | 3 | 0.7 | 1.5 | 0.8 | 41 | ○ | ○ | ○ |
| Comparative Example 6 | 5 | 0.7 | 35 | 30 | 3 | 0.7 | 1.5 | 0.8 | 41 | X | ○ | ○ |
| Comparative Example 7 | 5 | 0.7 | 12 | 15 | 3 | 0.7 | 1.5 | 0.8 | 41 | ○ | ○ | X |
| Inventive Example 9 | 5 | 0.7 | 12 | 20 | 3 | 0.7 | 1.5 | 0.8 | 41 | ○ | ○ | ○ |
| Inventive Example 10 | 5 | 0.7 | 12 | 60 | 3 | 0.7 | 1.5 | 0.8 | 41 | ○ | ○ | ○ |
| Comparative Example 8 | 5 | 0.7 | 12 | 65 | 3 | 0.7 | 1.5 | 0.8 | 41 | ○ | X | ○ |

(Where, the hybrid resin A+B is a urethane-acryl hybrid resin and a nanosilicate-phenoxy hybrid resin)

**[Table 3]**

| Category | Coating solution (wt%) | | | | | | | | | Quality characteristics | | |
|---|---|---|---|---|---|---|---|---|---|---|---|---|
| | V-PO₄ | MgO | Silane A | Hybrid resin A+B | phosphate | Zinc TiCO | ZrO | Silica | Silane B | Solution stability | Corrosion resistance | Blackening resistance |
| Comparative Example 9 | 5 | 0.7 | 12 | 30 | 1.5 | 0.7 | 1.5 | 0.8 | 41 | ○ | X | ○ |
| Inventive Example 11 | 5 | 0.7 | 12 | 30 | 2 | 0.7 | 1.5 | 0.8 | 41 | ○ | ○ | ○ |
| Inventive Example 12 | 5 | 0.7 | 12 | 30 | 10 | 0.7 | 1.5 | 0.8 | 41 | ○ | ○ | ○ |
| Comparative Example 10 | 5 | 0.7 | 12 | 30 | 12 | 0.7 | 1.5 | 0.8 | 41 | X | ○ | ○ |
| Comparative Example 11 | 5 | 0.7 | 12 | 30 | 3 | 0.3 | 1.5 | 0.8 | 41 | ○ | X | ○ |
| Inventive Example 13 | 5 | 0.7 | 12 | 30 | 3 | 0.5 | 1.5 | 0.8 | 41 | ○ | ○ | ○ |
| Inventive Example 14 | 5 | 0.07 | 12 | 30 | 3 | 3.4 | 1.5 | 0.8 | 41 | ○ | ○ | ○ |
| Comparative Example 12 | 5 | 0.7 | 12 | 30 | 3 | 4.0 | 1.5 | 0.8 | 41 | X | ○ | ○ |
| Comparative Example 13 | 5 | 0.7 | 12 | 30 | 3 | 0.7 | 0.3 | 0.8 | 41 | ○ | X | ○ |
| Inventive Example 15 | 5 | 0.7 | 12 | 30 | 3 | 0.7 | 0.5 | 0.8 | 41 | ○ | ○ | ○ |
| Inventive Example 16 | 5 | 0.7 | 12 | 30 | 3 | 0.7 | 4.0 | 0.8 | 41 | ○ | ○ | ○ |
| Comparative Example 14 | 5 | 0.7 | 12 | 30 | 3 | 0.7 | 4.5 | 0.8 | 41 | X | ○ | ○ |
| Comparative Example 15 | 5 | 0.7 | 12 | 30 | 3 | 0.7 | 1.5 | 0.2 | 41 | ○ | X | ○ |
| Inventive Example 17 | 5 | 0.7 | 12 | 30 | 3 | 0.7 | 1.5 | 0.4 | 41 | ○ | ○ | ○ |
| Inventive Example 18 | 5 | 0.7 | 12 | 30 | 3 | 0.7 | 1.5 | 3.0 | 41 | ○ | ○ | ○ |
| Comparative Example 16 | 5 | 0.7 | 12 | 30 | 3 | 0.7 | 1.5 | 3.5 | 41 | X | ○ | ○ |
| Comparative Example 17 | 5 | 0.7 | 12 | 30 | 3 | 0.7 | 1.5 | 0.8 | 20 | ○ | X | ○ |
| Inventive Example 19 | 5 | 0.7 | 12 | 30 | 3 | 0.7 | 1.5 | 0.8 | 28 | ○ | ○ | ○ |
| Inventive Example 20 | 5 | 0.7 | 12 | 30 | 3 | 0.7 | 1.5 | 0.8 | 57 | ○ | ○ | ○ |
| Comparative Example 18 | 5 | 0.7 | 12 | 30 | 3 | 0.7 | 1.5 | 0.8 | 60 | X | ○ | ○ |

(Where, the hybrid resin A+B is a urethane-acryl hybrid resin and a nanosilicate-phenoxy hybrid resin)

Since a content of vanadium phosphate in Comparative Example 1 was lower than the range limited in the present invention, a zinc phosphate layer blocking the penetration of corrosion factors was insufficient, and thus, corrosion resistance was decreased.

Since the content of vanadium phosphate in Comparative Example 2 was higher than the range limited in the present invention, etching occurred excessively, and thus, blackening resistance was decreased.

Since a content of Mg oxide in Comparative Example 3 was lower than the range limited in the present invention, a function of inhibiting corrosion through the formation of Mg hydrate was insufficient, and thus, corrosion resistance was decreased.

- Since a content of silane A in Comparative Example 5 was lower than the range limited in the present invention, a cross-linking role between a silane resin and an inorganic material was insufficient, and thus, corrosion resistance was decreased.

Since the content of silane A in Comparative Example 6 was higher than the range limited in the present invention, solution stability was decreased due to an excessive content of silane stably dispersed in the solution.

Since a content of the hybrid resin in Comparative Example 7 was lower than the range limited in the present invention, a function of a binder resin was insufficient, and thus, moisture penetration in a high-temperature and high-humidity environment was facilitated to decrease blackening resistance.

Since the content of the hybrid resin in Comparative Example 8 was higher than the range limited in the present invention, a content of the inorganic anti-corrosion agent was relatively decreased, and thus, corrosion resistance was decreased.

Since a content of zinc phosphate in Comparative Example 9 was lower than the range limited in the present invention, a role of assisting corrosion resistance was insufficient, and thus, corrosion resistance of the steel sheet was decreased.

Since the content of zinc phosphate in Comparative Example 10 was higher than the range limited in the present invention, appropriate mixing and dispersion with other anti-corrosion agents in the solution were not obtained, and thus, solution stability was decreased.

Since a content of titanium carbonate (TiCO₃) in Comparative Example 11 was lower than the range limited in the present invention, a cross-linking role with respect to the resin was insufficient, and thus, corrosion resistance was decreased.

Since the content of titanium carbonate in Comparative Example 12 was higher than the range limited in the present invention, appropriate mixing and dispersion with other anti-corrosion agents in the solution were not obtained, and thus, solution stability was decreased.

Since a content of the Zr compound in Comparative Example 13 was lower than the range limited in the present invention, a role of assisting corrosion resistance was insufficient, and thus, corrosion resistance of the steel sheet was decreased.

Since the content of the Zr compound in Comparative Example 14 was higher than the range limited in the present invention, appropriate mixing and dispersion with other anti-corrosion agents were not obtained, and thus, solution stability was decreased.

Since a content of silica in Comparative Example 15 was lower than the range limited in the present invention, bonding force with a resin layer was decreased, and thus, corrosion resistance was decreased.

Since the content of silica in Comparative Example 16 was higher than the range limited in the present invention, appropriate mixing and dispersion with other anti-corrosion agents were not obtained, and thus, solution stability was decreased.

Since a content of silane B in Comparative Example 17 was lower than the range limited in the present invention, functions of combining with an organic material and an inorganic additive and increasing corrosion resistance were decreased, and thus, corrosion resistance was decreased.

Since the content of silane B in Comparative Example 18 was higher than the range limited in the present invention, solution stability, was decreased, and thus, corrosion resistance was decreased.

In contrast, it may be confirmed that with respect to Inventive Examples 2 to 4 and 7 to 20 satisfying the composition of the coating solution controlled in the present invention, solution stabilities, corrosion resistances, and blackening resistances were evaluated as excellent.

### [Example 3]

Surfaces of hot-dip galvanized steel sheets (zinc coating weight of 40 g/m²) were coated with coating solutions, in which the compositions of the hybrid resin A+B were changed according to the conditions listed in Table 4 while the coating solution described in the composition of Inventive Example 2 is used as a base composition, with a roll coater method to form organic-inorganic hybrid coating layers and the hot-dip galvanized steel sheets were then heated to a PMT of 140°C for baking and drying to prepare coated samples.

Thereafter, solution stabilities and corrosion resistances of the coated steel sheets were evaluated by the same conditions and criteria as those of Example 2 and the results thereof are presented in Table 4. Herein, the hybrid resin A denotes a urethane-acryl hybrid resin and the hybrid resin B denotes a nanosilicate-phenoxy hybrid resin.

**[Table 4]**

| | Hybrid resin A | | | Hybrid resin B | | | Solution stability | Corrosion resistance | Others |
|---|---|---|---|---|---|---|---|---|---|
| | Addition amount | Molecular weight | NCO/OH | Addition amount | Molecular weight | silicate | | | |
| Comparative Example 18-1 | 10 | 68,000 | 1.6 | 12 | 78,000 | 1.5 | ○ | X | ○ |
| Inventive Example 21 | 12 | 68,000 | 1.6 | 12 | 78,000 | 1.5 | ○ | ○ | ○ |
| Inventive Example 22 | 18 | 68,000 | 1.6 | 12 | 78,000 | 1.5 | ○ | ○ | ○ |
| Inventive Example 23 | 36 | 68,000 | 1.6 | 12 | 78,000 | 1.5 | ○ | ○ | ○ |
| Comparative Example 19 | 40 | 68,000 | 1.6 | 12 | 78,000 | 1.5 | ○ | X | ○ |
| Comparative Example 20 | 5 | 35,000 | 1.6 | 12 | 78,000 | 1.5 | ○ | X | ○ |
| Comparative Example 21 | 5 | 95,000 | 1.6 | 12 | 78,000 | 1.5 | X | ○ | ○ |
| Comparative Example 22 | 5 | 68,000 | 0.5 | 12 | 78,000 | 1.5 | ○ | ○ | X |
| Comparative Example 23 | 5 | 68,000 | 3.5 | 12 | 78,000 | 1.5 | X | X | ○ |
| Comparative Example 24 | 5 | 68,000 | 1.6 | 6 | 78,000 | 1.5 | ○ | X | ○ |
| Comparative Example 25 | 5 | 68,000 | 1.6 | 30 | 78,000 | 1.5 | ○ | X | ○ |
| Comparative Example 26 | 5 | 68,000 | 1.6 | 12 | 35,000 | 1.5 | ○ | X | ○ |
| Comparative Example 27 | 5 | 68,000 | 1.6 | 12 | 95,000 | 1.5 | X | ○ | ○ |
| Comparative Example 28 | 5 | 68,000 | 1.6 | 12 | 78,000 | 0.5 | ○ | X | ○ |
| Comparative Example 29 | 5 | 68,000 | 1.6 | 12 | 78,000 | 3.5 | X | ○ | ○ |

In the case that contents of the hybrid resin A in Comparative Examples 18-1 and 24 were low at less than 12 wt%, a content of a resin constituting a coating layer having a dense structure by mixing with an inorganic material may be insufficient, and thus, corrosion resistances may deteriorate. However, even in the case that the input content of the hybrid resin was excessively high, an effect of improving physical properties due to the input thereof may not only be insignificant as in Comparative Examples 19 and 25, but corrosion resistances may also tend to be decreased again.

Comparative Examples 20 and 26 had limitations in that a portion of the inorganic anti-corrosion agent was precipitated due to the low weight-average molecular weight (Mw) of the hybrid resin. In contrast, in Comparative Examples 21 and 27, cross-linking densities were not secured because the weight-average molecular weights were relatively high, and thus, corrosion resistances were deteriorated.

Since hardness of the resin coating layer may not be secured in Comparative Example 22, the resin may be blackened during processing. In contrast, solution stability and corrosion resistance may be deteriorated in Comparative Example 23.

With respect to Comparative Example 28, corrosion resistance was deteriorated due to an insufficient content of silicate, an anti-corrosion agent. In contrast, with respect to Comparative Example 29, solution stability was deteriorated

Alternatively, with respect to Inventive Examples 21 and 22 satisfying the composition of the coating solution controlled in the present invention, it may be confirmed that qualities, such as solution stability, corrosion resistance, and other blackening resistance after processing were evaluated as excellent.

### [Example 4]

Surfaces of hot-dip galvanized steel sheets (zinc coating weight of 40 g/m²) were coated with the coating solution of Inventive Example 3 listed in Table 2 with a roll coater method to form organic-inorganic hybrid coating layers having .coating weights listed in the following Table 5 and the hot-dip galvanized steel sheets were then heated to a PMT of 140°C for baking and drying to prepare coated samples.

Thereafter, conductivities of the coated steel sheets were evaluated and the results thereof are presented in Table 5. At this time, conductivity was measured with a Loresta GP meter and was evaluated as below based on a level required for a typical Cr-free coated steel sheet of 0.1 mΩ. Corrosion resistance was evaluated by the same conditions and criteria as those of Example 2.
○: 0.1 mΩ or less
X: greater than 0.1 mΩ

**[Table 5]**

| Category | Coating weight (g/m²) | Corrosion resistance | Conductivity |
|---|---|---|---|
| Comparative Example 30 | 0.2 | X | ○ |
| Inventive Example 34 | 0.5 | ○ | ○ |
| Inventive Example 35 | 1.0 | ○ | ○ |
| Inventive Example 36 | 2.0 | ○ | ○ |
| Comparative Example 31 | 2.1 | ○ | X |

With respect to Comparative Example 30, since the coating weight was lower than the range limited in the present invention, a coating layer inhibiting corrosion was not formed in a sufficient thickness, and thus, corrosion resistance was decreased.

With respect to Comparative Example 31, since the coating weight was higher than the range limited in the present invention, electron flow was inhibited as nonconductive components were increased in the coating layer, and thus, a decrease in electrical conductivity resulted.

In contrast, with respect to Inventive Examples 34 to 36 satisfying the composition of the coating solution controlled in the present invention, it may be confirmed that both corrosion resistance and conductivity were evaluated as being excellent.

## Claims

1. An organic-inorganic hybrid coating solution composition comprising:
12 wt % to 36 wt % of a urethane-acryl hybrid resin, wherein an NCO/OH equivalence ratio of the urethane-acryl hybrid resin is in a range of 1 to 3;
8 wt % to 24 wt % of a nanosilicate-phenoxy hybrid resin;
8 wt % to 33 wt % of silane A;
28 wt % to 57 wt % of silane B;
3 wt % to 11 wt % of vanadium phosphate;
0.1 wt % to 1.4 wt % of magnesium (Mg) oxide;
2 wt % to 10 wt % of zinc phosphate;
0.5 wt % to 3.4 wt % of titanium carbonate;
0.5 wt % to 4 wt % of a zirconium (Zr) compound; and
0.4 wt % to 3 wt % of silica, based on a solid content,
and, wherein a weight-average molecular weight (Mw) of each of the urethane-acryl hybrid resin and the nanosilicate-phenoxy hybrid resin is in a range of 40,000 to 90,000.

2. The organic-inorganic hybrid coating solution composition of claim 1, wherein the nanosilicate-phenoxy hybrid resin comprises 1.0 wt % to 3.0 wt % of nanosilicate.

3. The organic-inorganic hybrid coating solution composition of claim 1, where the inorganic-based anti-corrosion agent comprises 0.5 wt % to 7 wt % of thio-urea.

4. The organic-inorganic hybrid coating solution composition of claim 1, wherein the silane A is a mixture of at least one of gamma glycidoxypropyl triethoxysilane and gamma aminopropyl triethoxysilane.

5. The organic-inorganic hybrid coating solution composition of claim 1, wherein the silane B is a mixture of one or more of a vinyl-based silane, an epoxy-based silane, and an alkoxy-based silane.

6. An organic-inorganic hybrid coated steel sheet comprising:
a base steel sheet;
a zinc-based plating layer formed on the base steel sheet; and
a coating layer formed on the plating layer,
wherein the coating layer is formed with any one of the coating solution compositions of claims 1 to 5.

7. The organic-inorganic hybrid coated steel sheet of claim 6, wherein a coating weight of the coating layer is in a range of 0.3 g/m2 to 2 g/m2 based on one side of the steel sheet.

## Patentansprüche

1. Hybride organisch-anorganische Beschichtungslösungszusammensetzung, umfassend:
12 Gew-% bis 36 Gew.-% eines hybriden Urethan-Acryl-Harzes, wobei ein NCO/OH-Äquivalenzverhältnis des hybriden Urethan-Acryl-Harzes in einem Bereich von 1 bis 3 liegt;
8 Gew.-% bis 24 Gew.-% eines hybriden Nanosilicat-Phenoxy-Harzes;
8 Gew.-% bis 33 Gew.-% Silan A;
28 Gew.-% bis 57 Gew.-% Silan B;
3 Gew.-% bis 11 Gew.-% Vanadiumphosphat;
0,1 Gew.-% bis 1,4 Gew.-% Magnesium-(Mg)-Oxid;
2 Gew.-% bis 10 Gew.-% Zinkphosphat;
0,5 Gew.-% bis 3,4 Gew.-% Titancarbonat;
0,5 Gew.-% bis 4 Gew.-% einer Zirkon-(Zr)-Verbindung; und
0,4 Gew.-% bis 3 Gew.-% Siliciumdioxid, basierend auf einem Feststoffgehalt,
und wobei ein Molekulargewicht (Mw) im Gewichtsmittel jeweils des hybriden Urethan-Acryl-Harzes und des hybriden Nanosilicat-Phenoxy-Harzes in einem Bereich von 40.000 bis 90.000 liegt.

2. Hybride organisch-anorganische Beschichtungslösungszusammensetzung nach Anspruch 1, wobei das hybride Nanosilicat-Phenoxy-Harz 1,0 Gew.-% bis 3,0 Gew.-% Nanosilicat umfasst.

3. Hybride organisch-anorganische Beschichtungslösungszusammensetzung nach Anspruch 1, wobei das Antikorrosionsmittel auf anorganischer Basis 0,5 Gew.-% bis 7 Gew.-% Thioharnstoff umfasst.

4. Hybride organisch-anorganische Beschichtungslösungszusammensetzung nach Anspruch 1, wobei das Silan A ein Gemisch aus Gamma-Glycidoxypropyltriethoxysilan und/oder Gamma-Aminopropyltriethoxysilan ist.

5. Hybride organisch-anorganische Beschichtungslösungszusammensetzung nach Anspruch 1, wobei das Silan B ein Gemisch aus einem oder mehreren Silan/en, und zwar einem Silan auf Vinylbasis, einem Silan auf Epoxybasis oder einem Silan auf Alkoxybasis ist.

6. Mit einer hybriden organisch-anorganischen Beschichtung beschichtetes Stahlblech, umfassend:
ein Grundstahlblech;
eine auf dem Grundstahlblech ausgebildete Plattierungsschicht auf Zinkbasis; und
eine auf der Plattierungsschicht ausgebildete Beschichtungslage,
wobei die Beschichtungslage mit einer beliebigen der Beschichtungslösungszusammensetzungen der Ansprüche 1 bis 5 ausgebildet ist.

7. Mit einer hybriden organisch-anorganischen Beschichtung beschichtetes Stahlblech nach Anspruch 6, wobei ein Beschichtungsgewicht der Beschichtungslage, basierend auf einer Seite des Stahlblechs, in einem Bereich von 0,3 g/m² bis 2 g/m² liegt.

## Revendications

1. Composition solution de revêtement hybride organique-inorganique comprenant :
12 % en poids à 36 % en poids d'une résine hybride uréthane-acryl, sachant qu'un rapport d'équivalence NCO/OH de la résine hybride uréthane-acryl est compris dans une plage de 1 à 3 ;
8 % en poids à 24 % en poids d'une résine hybride nanosilicate-phénoxy ;
8 % en poids à 33 % en poids de silane A ;
28 % en poids à 57 % en poids de silane B ;
3 % en poids à 11 % en poids de phosphate de vanadium ;
0,1 % en poids à 1,4 % en poids d'oxyde de magnésium (Mg) ;
2 % en poids à 10 % en poids de phosphate de zinc ;
0,5 % en poids à 3,4 % en poids de carbonate de titane ;
0,5 % en poids à 4 % en poids d'un composé de zirconium (Zr) ; et
0,4 % en poids à 3 % en poids de silice, sur la base d'une teneur solide,
et, sachant qu'un poids moléculaire moyen pondéral (Mw) de chacune de la résine hybride uréthane-acryl et de la résine hybride nanosilicate-phénoxy est compris dans une plage de 40 000 à 90 000.

2. La composition solution de revêtement hybride organique-inorganique de la revendication 1,
sachant que la résine hybride nanosilicate-phénoxy comprend 1,0 % en poids à 3,0 % en poids de nanosilicate.

3. La composition solution de revêtement hybride organique-inorganique de la revendication 1,
sachant que l'agent anticorrosion à base inorganique comprend 0,5 % en poids à 7 % en poids de thio-uréa.

4. La composition solution de revêtement hybride organique-inorganique de la revendication 1,
sachant que le silane A est un mélange d'au moins l'un de triéthoxysilane de glycidoxypropyle gamma et de triéthoxysilane d'aminopropyle gamma.

5. La composition solution de revêtement hybride organique-inorganique de la revendication 1,
sachant que le silane B est un mélange d'un ou de plusieurs d'un silane à base de vinyle, d'un silane à base d'époxy, et d'un silane à base d'alkoxy.

6. Tôle d'acier revêtue d'une solution hybride organique-inorganique comprenant :
une tôle d'acier de base ;
une couche de placage à base de zinc formée sur la tôle d'acier de base ; et
une couche de revêtement formée sur la couche de placage,
sachant que la couche de revêtement est formée avec l'une quelconque des compositions solutions de revêtement des revendications 1 à 5.

7. La tôle d'acier revêtue d'une solution hybride organique-inorganique de la revendication 6,
sachant qu'un poids de revêtement de la couche de revêtement est compris dans une plage de 0,3 g/m² à 2 g/m² sur la base d'un côté de la tôle d'acier.
